# EUROPÄISCHE PATENTANMELDUNG

(11) **EP 1 149 868 A2**
(43) Veröffentlichungstag der Anmeldung: **31.10.2001**
(21) Anmeldenummer: 01109539.5
(22) Anmeldetag: 17.04.2001
(51) Int. Cl.: C08L 21/00, B60C 1/00

(54) **Gelhaltige Kautschukmischungen für dynamisch belastete Reifenbauteile**

(30) Priorität: 28.04.2000 DE 10021070
(71) Anmelder: Bayer Aktiengesellschaft, 51368 Leverkusen (DE)
(72) Erfinder: Obrecht, Werner, Dr., 47447 Moers (DE); Sumner, Anthony, 51061 Köln (DE)

(57) **Zusammenfassung**

Die Erfindung betrifft Kautschukmischungen aus mindestens einem doppelbindungshaltigen Kautschuk und Zusätzen von Polybutadienkautschukpartikeln mit einer Glastemperatur <-60°C sowie daraus hergestellte Vulkanisate und Kautschukformkörper.

Die erfindungsgemäßen Kautschukmischungen zeichnen sich im unvernetzten Zustand durch gute Verarbeitbarkeit und ausreichende Scorchsicherheit sowie im vulkanisierten Zustand durch hohe Shore A-Härten, hohe Rückprallelastizitäten, niedrige Hystereseverluste und eine niedrige Erwärmung bei dynamischer Beanspruchung sowie eine niedrige spezifische Dichte aus.

Die Vulkanisate eignen sich insbesondere für die Herstellung von Reifenbauteilen, für die eine niedrige Erwärmung bei dynamischer Belastung gefordert wird, z.B. für Reifenwulst- und Apexmischungen, Substread-Mischungen, Reifenkarkassen und für Reifenseitenwände. Besonders geeignet sind die Mischungen für die Herstellung verstärkter Seitenwände von Reifen mit Notlaufeigenschaften ("inserts for run flat tyres").

## Beschreibung

Die Erfindung betrifft Kautschukmischungen (Kautschukcompounds), die Kautschukpartikel (Kautschukgele) aus Polybutadien mit einer Glastemperatur < -60°C enthalten und sich im unvernetzten Zustand durch gute Verarbeitbarkeit sowie ausreichend hohe Scorchsicherheit auszeichnen und beispielsweise im vulkanisierten Zustand hohe Shore A-Härten, hohe Rückprallelastizitäten, geringe Hystereseverluste sowie eine niedrige Erwärmung bei dynamischer Belastung aufweisen und deren hieraus hergestellte Vulkanisate ein niedriges Gewicht besitzen. Die Vulkanisate eignen sich insbesondere für die Herstellung von Reifenbauteilen, für die eine niedrige Erwärmung bei dynamischer Belastung gefordert wird, z.B. für Reifenwulst- und Apexmischungen, Reifenkarkassen, Substread-Mischungen und besonders für Reifenseitenwände. Insbesondere geeignet sind die Mischungen für die Herstellung verstärkter Seitenwände von Reifen mit Notlaufeigenschaften ("inserts for run flat tyres").

Die übliche Verfahrensweise zur Herstellung von Reifencompounds, die das Anforderungsprofil für Verstärkungen von Reifenseitenwänden erfüllt, besteht in der Herstellung von Kautschukcompounds mit Füllstoffdosierungen in Mengen von > 50 phr. Durch die Dosierung üblicher anorganischer Füllstoffe, wie Ruß oder Kieselsäure, in Mengen von > 50 Gew.-Teile, bezogen auf 100 Gew.-Teile Kautschuk, werden Mischungen mit hohen Shore A-Härten erhalten, was bedeutet, dass die Viskositäten dieser Mischungen sehr hoch sind und die Mischungen sich dadurch schlecht verarbeiten lassen. Darüber hinaus können bei der Mischungsherstellung hohe Friktionskräfte auftreten, so dass die Compounds sich stark erwärmen und es zur vorzeitigen Anvulkanisation (Scorch), erkennbar an den kurzen Scorchzeiten der Mischungen, kommen kann. Im vulkanisierten Zustand weisen derartige Gummiartikel niedrige Elastizitäten und eine starke Wärmeentwicklung bei dynamischer Belastung auf. Aufgrund der hohen Dichten der verwendeten anorganischen Füllstoffe (ρ_{Ruß} = 1,8 g/cm³; ρ_{Kieselsäure} = 2,1 g/cm³) besitzen die aus solchen Mischungen hergestellten Gummiartikel ein hohes Gewicht.

Die Verbesserung der Compoundeigenschaften bei kieselsäuregefüllten Compounds wird durch Zusätze schwefelhaltiger Organosiliziumverbindungen erreicht (siehe DE-A 21 41 159, US 3 873 489, US 5 110 969, US 4 709 065 und US 5 227 425). In diesen Patentveröffentlichungen wird der positive Einfluß schwefelhaltiger Organosiliciumverbindungen auf die mechanischen Eigenschaften kieselsäuregefüllter Vulkanisaten beschrieben. Jedoch ist die Mischungsherstellung aufwendig, die Scorchzeiten sind kurz und die bei dynamischen Belastungen auftretenden Hystereseverluste sowie die hiermit verbundene Wärmeentwicklung bei derartigen Vulkanisaten sind noch verbesserungswürdig.

Durch die Verwendung sternförmig verzweigter Kautschuke (EP-A 218 876) in Kombination mit üblichen Füllstoffen, wie Ruß, gelingt die Herstellung von Kautschukcompounds, die die Herstellung von Vulkanisaten mit einer hohen Shore A-Härte ermöglicht, ohne dass die Mischungsviskosität übermäßig ansteigt. Derartige Mischungen sind gut verarbeitbar und weniger scorchanfällig. Die Rückprallelastizität solcher Vulkanisate und die Wärmeentwicklung bei dynamischer Belastung sind jedoch noch nicht ausreichend. Außerdem wird durch den Zusatz sternförmig verzweigter Kautschuke das Gewicht der daraus hergestellten Gummiartikel nicht reduziert.

Durch die Verwendung von Bisthiocarbamoylverbindungen, die zu 1,2-Dithioethandiyl-Netzbrücken im Vulkanisat führen, gelingt die Herstellung von Reifenlaufflächen (EP-A 0 432 417) und von Reifenseitenwänden (EP-A 0 432 405) mit hoher Rückprallelastizität und mit niedriger Erwärmung bei dynamischer Beanspruchung (gemessen mit Goodrich-Flexometer). Die Reduktion des Wärmeaufbaus bei dynamischer Belastung ist allerdings noch nicht ausreichend.

Der vollständige oder partielle Ersatz üblicher anorganischer Füllstoffe durch Mikrogele wird z.B. in folgenden Patentanmeldungen bzw. Patenten beschrieben: EP-A 405 216, DE-A 42 20 563, GB-A 1 078 400, EP-A 432 405, EP-A 854 170 und EP-A 432 417. In den Patenten bzw. Anmeldungen EP-A 405 216, EP-A 854 170, US 5 395 891 sowie in GB-A 1 078 400 wird die Verwendung von CR-, BR-, SBR- und NBR-Mikrogelen in Mischungen mit doppelbindungshaltigen Kautschuken beschrieben. In diesen Patentveröffentlichungen werden jedoch keine Compounds beschrieben, die bei niedriger Deformation (<300 %) einen hohen Spannungswert und bei dynamischer Belastung sehr niedrige Hystereverluste und eine sehr niedrige Wärmeentwicklung aufweisen.

Es bestand daher die Aufgabe Kautschukmischungen herzustellen, die sich im unvernetzten Zustand durch gute Verarbeitbarkeit sowie durch hohe Scorchsicherheit auszeichnen und im vulkanisierten Zustand hohe Shore A-Härten, hohe Rückprallelastizitäten sowie insbesondere geringe Hystereseverluste und eine niedrige Erwärmung bei dynamischer Beanspruchung sowie ein niedriges Gewicht aufweisen.

Diese Aufgabe wird gelöst durch Kautschukmischungen bestehend aus mindestens einem doppelbindungshaltigen Kautschuk (A) und Partikeln aus Polybutadienkautschuk mit einer Glastemperatur < -60°C (B), sowie gegebenenfalls weiteren Füllstoffen und Kautschukhilfsmitteln.

Gegenstand der vorliegenden Erfindung sind daher Kautschukmischungen bestehend aus mindestens einem doppelbindungshaltigen Kautschuk (A) und Partikeln aus Polybutadienkautschuken mit einer Glastemperatur <-60°C, bevorzugt -65°C bis -100°C, wobei die Komponente (B) in Mengen von 10 bis 150, bevorzugt 30 bis 120 Gew.-%, bezogen auf die Gesamtmenge an Komponente (A), vorhanden ist, sowie gegebenenfalls weiteren Füllstoffen und Kautschukhilfsmitteln.

Unter doppelbindungshaltigem Kautschuk (A) versteht man die Kautschuke, die nach DIN/ISO 1629 als als R-Kautschuke bezeichnet werden. Diese Kautschuke haben in der Hauptkette eine Doppelbindungen. Hierzu gehören z.B.:
- NR:: Naturkautschuk
- SBR:: Styrol/Butadienkautschuk
- SIBR:: Styrol/Isopren/Butadienkautschuk
- BR:: Polybutadienkautschuk in unverzweigter oder verzweigter Form, bevorzugt sternförmig verzweigter Form
- NBR:: Nitrilkautschuk
- IIR:: Butylkautschuk
- HNBR:: teilhydrierter Nitrilkautschuk
- SNBR:: Styrol/Butadien/Acrylnitril-Kautschuk
- CR:: Polychloropren.

Unter doppelbindungshaltigen Kautschuken (A) sollen aber auch Kautschuke verstanden werden, die nach DIN/ISO 1629 M-Kautschuke sind und neben der gesättigten Hauptkette Doppelbindungen in Seitenketten aufweisen. Hierzu gehört z.B. EPDM.

Bevorzugte Kautschuke sind NR, BR, SBR SIBR und SNBR.

Unter Partikeln aus Polybutadienkautschuk werden Kautschukgele oder Mikrogele verstanden. Die allgemeine Herstellung derselben ist z.B. in US 5 395 891 beschrieben.

Die Mikrogele besitzen Teilchendurchmesser von 5-1000 nm, bevorzugt 20-600 nm (DVN-Wert nach DIN 53206). Aufgrund ihrer Vernetzung sind sie unlöslich und in geeigneten Quellmitteln wie z.B. Toluol quellbar. Die Quellungsindizes der Mikrogele (Qᵢ) in Toluol betragen 1-50, vorzugsweise 6-20. Der Quellungsindex wird aus dem Gewicht des lösungsmittelhaltigen Gels (nach Zentrifugation mit 20.000 Upm) und dem Gewicht des trockenen Gels berechnet:

Qᵢ = Naßgewicht des Gels/Trockengewicht des Gels.

Zur Ermittlung des Quellungsindex läßt man 250 mg Gel in 25 ml Toluol 24 h unter Schütteln quellen. Das Gel wird abzentrifugiert und gewogen und anschließend bei 70°C bis zur Gewichtskonstanz getrocknet und nochmals gewogen.

Die Glasübergangstemperaturen (Glastemperaturen) der Polybutadienpartikel werden mittels DSC (Differential Scanning Calorimetry) bestimmt.

Die Herstellung der unvernetzten Kautschuk-Ausgangsprodukte kann durch Emulsionspolymerisation und Lösungspolymerisation in bekannter Weise erfolgen.

Bei der Herstellung der Polybutadien-Kautschukpartikel durch Emulsionspolymerisation können noch zusätzliche, radikalisch polymerisierbare Monomere eingesetzt werden und zwar in Mengen von bis zu 10 Gew.-%. Zu nennen sind beispielsweise Styrol, Acrylnitril, Isopren, Ester der Acryl- und Methacrylsäure, Tetrafluorethylen, Vinylidenfluorid, Hexafluorpropen, 2-Chlorbutadien, 2,3-Dichlorbutadien sowie doppelbindungshaltige Carbonsäuren, wie Acrylsäure, Methacrylsäure, Maleinsäure, Itaconsäure, doppelbindungshaltige Hydroxyverbindungen, wie Hydroxyethylmethacrylat, Hydroxyethylacrylat, Hydroxypropylmethacrylat, Hydroxybutylmethacrylat, oder doppelbindungshaltige Epoxide, wie Glycidylmethacrylat oder Glycidylacrylat.

Die Vernetzung der Kautschukpartikel kann direkt während der Emulsionspolymerisation durch Copolymerisation mit vernetzend wirkenden multifunktionellen Verbindungen erreicht werden. Bevorzugte multifunktionelle Comonomere sind Verbindungen mit mindestens zwei, vorzugsweise 2 bis 4 copolymerisierbaren C=C-Doppelbindungen, wie Diisopropenylbenzol, Divinylbenzol, Divinylether, Divinylsulfon, Diallylphthalat, Triallylcyanurat, Triallylisocyanurat, 1,2-Polybutadien, N,N'-m-Phenylenmaleimid, 2,4-Toluylenbis(maleimid) und/oder Triallyltrimellitat. Darüber hinaus kommen in Betracht die Acrylate und Methacrylate von mehrwertigen, vorzugsweise 2 bis 4-wertigen C₂ bis C₁₀ Alkoholen, wie Ethylenglykol, Propandiol-1,2, Butandiol, Hexandiol, Polyethylenglykol mit 2 bis 20, vorzugsweise 2 bis 8 Oxyethyleneinheiten, Neopentylglykol, Bisphenol-A, Glycerin, Trimethylolpropan, Pentaerythrit, Sorbit mit ungesättigten Polyestern aus aliphatischen Di- und Polyolen sowie Maleinsäure, Fumarsäure und/oder Itaconsäure.

Die Vernetzung der Kautschukpartikel während der Emulsionspolymerisation kann auch durch Fortführung der Polymerisation bis zu hohen Umsätzen oder im Monomerzulaufverfahren durch Polymerisation bei hohen internen Umsätzen erfolgen. Eine andere Möglichkeit besteht auch in der Durchführung der Emulsionspolymerisation in Abwesenheit von Reglern.

Für die Vernetzung des un- bzw. schwach vernetzten Butadien(co)polymerisats im Anschluß an die Emulsionspolymerisastion setzt man am besten die Latices ein, die bei der Emulsionspolymerisation erhalten werden. Prinzipiell kann diese Methode auch bei nichtwässrigen Polymerdispersionen angewandt werden, die auf andere Weise wie z.B. durch Umlösung zugänglich sind.

Geeignet vernetzend wirkende Chemikalien sind beispielsweise organische Peroxide, wie Dicumylperoxid, t-Butylcumylperoxid, Bis-(t-butyl-peroxy-isopropyl)benzol, Di-t-butylperoxid, 2,5-Dimethylhexan-2,5-dihydroperoxid, 2,5-Dimethylhexin-3,2,5-di-hydroperoxid, Dibenzoylperoxid, Bis-(2,4-dichlorobenzoyl)peroxid, t-Butylperbenzoat, sowie organische Azoverbindungen, wie Azo-bis-isobutyronitril und Azo-biscyclohexannitril, sowie Di- und Polymercaptoverbindungen, wie Dimercaptoethan, 1,6-Dimercaptohexan, 1,3,5-Trimercaptotriazin und mercaptoterminierte Polysulfid-kautschuke wie mercaptoterminierte Umsetzungsprodukte von Bis-Chlorethylformal mit Natriumpolysulfid. Die optimale Temperatur zur Durchführung der Nachvernetzung ist naturgemäß von der Reaktivität des Vernetzers abhängig und kann bei Temperaturen von Raumtemperatur bis ca. 180°C gegebenenfalls unter erhöhtem Druck durchgeführt werden (siehe hierzu Houben-Weyl, Methoden der organischen Chemie, 4. Auflage, Band 14/2, Seite 848). Besonders bevorzugte Vernetzungsmittel sind Peroxide.

Die Vernetzung C=C Doppelbindungen enthaltender Polybutadienkautschuke zu Kautschukpartikeln kann auch in Dispersion bzw. Emulsion bei gleichzeitiger, partieller, oder vollständiger Hydrierung der C=C Doppelbindung durch Hydrazin wie in US 5,302,696 oder US 5,442,009 beschrieben oder gegebenenfalls mit anderen Hydrierungsmitteln, beispielsweise Organometallhydridkomplexe, erfolgen.

Auch Polybutadienkautschuke, die durch Lösungspolymerisation hergestellt werden, können als Ausgangsprodukte für die Herstellung der Mikrogele dienen. In diesen Fällen geht man von den Lösungen dieser Kautschuke in geeigneten organischen Lösungsmitteln aus. Man stellt die gewünschten Größen der Mikrogele dadurch her, dass man die Kautschuklösung in einem flüssigen Medium, vorzugsweise in Wasser, gegebenenfalls unter Zugabe geeigneter oberflächenaktiver Hilfsmitteln, wie Tensiden, mittels geeigneter Aggregate mischt, so dass eine Dispersion des Kautschuks im geeigneten Teilchengrößenbereich erhalten wird. Für die Vernetzung der dispergierten Lösungskautschuke geht man wie zuvor für die nachträgliche Vernetzung von Emulsionspolymerisaten beschriebenen, vor. Als Vernetzer eignen sich die zuvor genannten Verbindungen, wobei man das für die Herstellung der Dispersion eingesetzte Lösungsmittel gegebenenfalls vor der Vernetzung z.B. destillativ entfernen kann.

Für die erfindungsgemäßen Kautschukmischungen ist es von Bedeutung, dass Polybutadien-Kautschuk-Partikel (Gele) eingesetzt werden, die eine Glasübergangstemperatur von <-60°C, bevorzugt -65°C bis -100°C, besitzen. Solche Polybutadien-Kautschuk-Partikel mit den genannten Glasübergangstemperaturen können gezielt nach den oben angeführten Vorschriften zur Herstellung solcher Gele hergestellt werden, beispielsweise durch gezielten Einsatz der Vernetzungsmittel sowie durch den Einsatz multifunktioneller Diene bei der Emulsionspolymerisation des Butadiens.

Die erfindungsgemäßen Kautschukmischungen aus mindestens einem doppelbindungshaltigen Kautschuk (A) mit Zusätzen von Partikeln aus Polybutadienkautschuk mit einer Glastemperatur < -60°C (B) können gegebenenfalls weitere Füllstoffe und Kautschukhilfsmittel enthalten.

Besonders geeignete Füllstoffe zur Herstellung der erfindungsgemäßen Kautschukmischungen und -vulkanisate sind anorganische und polymere Füllstoffe:
- Ruße. Die hierbei zu verwendenden Ruße sind nach dem Flammruß-, Furnace- oder Gasrußverfahren hergestellt und besitzen BET-Oberflächen von 20-200 m²/g wie z.B: SAF-, ISAF-, IISAF-, HAF-, FEF- oder GPF-Ruße.
- hochdisperse Kieselsäure, hergestellt z.B. durch Fällungen von Lösungen von Silikaten oder Flammhydrolyse von Siliciumhalogeniden mit spezifischen Oberflächen von 5-1000, vorzugsweise 20-400 m²/g (BET-Oberfläche) und Primärteilchengrößen von 5-400 nm. Die Kieselsäuren können gegebenenfalls auch als Mischoxide mit anderen Metalloxiden, wie Al-, Mg-, Ca-, Ba, Zn- und Ti Oxiden vorliegen, wobei bevorzugt Kieselsäuren eingesetzt werden, die mit geeigneten Verbindungen, wie z.B. Si 69® (Degussa) aktiviert werden.
- synthetische Silikate, wie Aluminiumsilikat, Erdalkalisilikat, wie Magnesiumsilikat oder Calciumsilikat mit BET-Oberflächen von 20-400 m²/g und Primärteilchendurchmessern von 5-400 nm.
- natürliche Silikate, wie Kaolin und andere natürlich vorkommende Kieselsäuren.
- Metalloxide, wie Zinkoxid, Calciumoxid, Magnesiumoxid, Aluminiumoxid.
- Metallcarbonate, wie Calciumcarbonat, Magnesiumcarbonat, Zinkcarbonat.
- Metallsulfate, wie Calciumsulfat, Bariumsulfat.
- Metallhydroxide, wie Aluminiumhydroxid und Magnesiumhydroxid.
- Glasfasern und Glasfaserprodukte (Latten, Stränge oder Mikroglaskugeln).
- Thermoplastfasern (Polyamid, Polyester, Aramid).
- Kautschukgele auf Basis Styrol/Butadien, Polychloropren, Nitrilkautschuk, Naturkautschuk, die einen hohen Vernetzungsgrad besitzen mit Teilchengrößen von 5-1000 nm und einer Glastemperatur > -50°C.
- Polymere Füllstoffe wie Stärke, Cellulose, Lignin, trans-1,4-Polybutadien, syndiotaktisches 1,2-Polybutadien etc.

Die genannten Füllstoffe können allein oder im Gemisch eingesetzt werden. In einer besonders bevorzugten Ausführung des Verfahrens werden 30-120 Gewichtsteile Polybutadienpartikel mit einer Glastemperatur <-60°C (B), gegebenenfalls zusammen mit 0,1-100 Gewichtsteilen Ruß und/oder 0,1-100 Gewichtsteilen hellen Füllstoffen, jeweils bezogen auf 100 Gewichtsteile unvernetzten Kautschuks (A), eingesetzt.

Die erfindungsgemäßen Kautschukmischungen können weitere Kautschukhilfsmittel enthalten, wie z.B. Vernetzer, Schwefel, Reaktionsbeschleuniger, Alterungsschutzmittel, Wärmestabilisatoren, Lichtschutzmittel, Ozonschutzmittel, Verarbeitungshilfsmittel, Weichmacher, Tackifier, Treibmittel, Farbstoffe, Pigmente, Wachse, Harze, Streckmittel, organische Säuren, Verzögerer, Metalloxide, sowie Füllstoffaktivatoren, wie beispielsweise Triethanolamin, Polyethylenglykol, Hexantriol, Bis-(triethoxisilylpropyl)-Tetrasulfid oder anderen, die der Gummiindustrie bekannt sind.

Die Kautschukhilfsmittel und die Füllstoffe werden in üblichen Mengen, die sich u.a. nach dem Verwendungszweck richten, eingesetzt. Übliche Mengen sind z.B. Mengen von ca. 0,1 bis 100, bevorzugt 0,1 bis 50 Gew.-%, bezogen auf eingesetzte Mengen an Kautschuk (A).

Als übliche Vernetzer können Schwefel, Schwefelspender, Peroxide oder Vernetzungsmittel, wie beispielsweise Diisopropenylbenzol, Divinylbenzol, Divinylether, Divinylsulfon, Diallylphthalat, Triallylcyanurat, Triallylisocyanurat, 1,2-Polybutadien, N,N'-m-Phenylenmaleimid und/oder Triallyltrimellitat verwendet werden. Darüber hinaus kommen in Betracht die Acrylate und Methacrylate von mehrwertigen, vorzugsweise 2 bis 4-wertigen C₂ bis C₁₀ Alkoholen, wie Ethylenglykol, Propandiol-1,2-butandiol, Hexandiol, Polyethylenglykol mit 2 bis 20, vorzugsweise 2 bis 8 Oxyethyleneinheiten, Neopentylglykol, Bisphenol-A, Glycerin, Trimethlypropan, Pentaerythrit, Sorbit mit ungesättigten Polyestern aus aliphatischen Di- und Polyolen sowie Maleinsäure, Fumarsäure und/oder Itaconsäure.

Die erfindungsgemäßen Kautschukmischungen können darüber hinaus Vulkanisationsbeschleuniger enthalten. Beispiele für geeignete Vulkanisationsbeschleuniger sind z.B. Mercaptobenzthiazole, -sulfenamide, Guanidine, Thiurame, Dithiocarbamate, Thioharnstoffe, Thiocarbonate sowie Dithiophosphate.

Die Vulkanisationsbeschleuniger, Schwefel und Schwefelspender oder Peroxide oder weitere Vernetzungsmittel wie beispielsweise dimeres 2,4-Toluyliden-di-isocyanat (= Desmodur TT), 1,6-Bis(N,N'-dibenzylthiocarbamoyldithio)-hexan (bevorzugt) oder 1,4-bis-1-Ethoxyhydrochinon (= Vernetzer 30/10) werden insbesondere in Mengen von 0,1-40 Gewichtsteile, bevorzugt 0,1-10 Gewichtsteile, bezogen auf die gesamte Menge an eingesetztem Kautschuk eingesetzt.

Die Vulkanisation der erfindungsgemäßen Kautschukmischungen kann bei Temperaturen von 100-250°C, bevorzugt 130-180°C, gegebenenfalls unter Druck von 10-200 bar erfolgen.

Die erfindungsgemäßen Kautschukmischungen aus doppelbindungshaltigem Kautschuk (A) und Zusätzen von Partikeln aus Polybutadienkautschuk mit einer Glastemperatur <-60°C (B) können auf verschiedene Arten hergestellt werden:

Zum einen ist es selbstverständlich möglich, die festen Einzelkomponenten zu mischen. Dafür geeignete Aggregate sind beispielsweise Walze, Innenmischer oder auch Mischextruder. Aber auch das Mischen durch Vereinigen der Latices der unvernetzten oder auch der vernetzen Kautschuke ist möglich. Isolierung der so hergestellten erfindungsgemäßen Mischung kann wie üblich, durch Eindampfen, Ausfällen oder Gefrierkoagulation (US-PS 2.187.146) erfolgen. Durch Einmischen von Füllstoffen in die Latexmischung und anschließende Aufarbeitung können die erfindungsgemäßen Mischungen direkt als Kautschuk-/Füllstoff-Formulierung erhalten werden. Die weitere Abmischung der Kautschukmischung aus doppelbindungshaltigem Kautschuk (A) und Kautschukgel (B) mit zusätzlichen Füllstoffen sowie gegebenenfalls Kautschukhilfsmitteln kann in üblichen Mischaggregaten, Walzen, Innenmischer oder auch Mischextrudern, durchgeführt werden. Bevorzugte Mischtemperaturen liegen bei 50-180°C.

Die erfindungsgemäßen Kautschukmischungen eignen sich insbesondere für die Herstellung von Reifenbauteilen, für die eine niedrige Erwärmung bei hoher dynamischer Belastung gefordert wird, z.B. für Wulstmischungen, Reifenkarkassen, Substread-Mischungen und für Reifenseitenwände. Besonders geeignet sind die Mischungen für die Herstellung verstärkter Seitenwände von Reifen mit Notlaufeigenschaften ("inserts for run flat tyres").

### Beispiele

Die BR-Kautschukpartikel werden entsprechend US 5 395 891, BR gel A1 sowie das SBR-Kautschukpartikel entsprechend EP 854 170 A1, Beispiel 1, durch Vernetzung der wässrigen Kautschukdispersionen mittels Dicumylperoxid hergestellt. Charakteristische Daten der Kautschukpartikel sind in folgender Tabelle zusammengefasst:

| **Gel OBR** | **Kautschuktyp (BR/SBR)** | **DCP-Menge [phr]** | **Durchmesser d50 [nm]** | **Gelgehalt [%]** | **Quellungsindex** | **Glastemperatur [°C]** | **Dichte [g/cm**^{**3**}**]** |
|---|---|---|---|---|---|---|---|
| 1052 A* | BR | 0,5 | 116 | 95 | 7,8 | -75 | 0,9191 |
| 1052 B* | BR | 1,0 | 116 | 97 | 7,4 | -66,5 | 0,9349 |
| 821 | BR | 1,0 | 123 | 97 | 5,4 | -60 | 0,9465 |
| 801 | BR | 1,0 | 157 | 98 | 4,7 | -55 | 0,9499 |
| 1049A | BR | 1,5 | 110 | 96 | 4,7 | -52 | 0,9556 |
| 802 | BR | 1,5 | 154 | 98 | 3,2 | -40,5 | 0,9668 |
| 803 | BR | 2,0 | 155 | 98 | 3,2 | -30,5 | 0,9764 |
| 900 | BR | 2,5 | 39 | 91 | 4,2 | -35 | 0,9864 |
| 901 | BR | 4 | 37 | 89 | 3,2 | -0,5 | 0,9965 |
| 786 | SBR | 1,5 | 56 | 98 | 4,9 | -22,5 | 0,9819 |

| | | | | | | | |
|---|---|---|---|---|---|---|---|
| * = erfindungsgemäß | | | | | | | |

### 1c) Compoundherstellung , Vulkanisation und Ergebnisse

Es werden werden folgende Mischungsserien hergestellt und die Eigenschaften der entsprechenden Vulkanisate bestimmt:

### Mischungsserie A:

In dieser Mischungsserie wird gezeigt, daß es mit Kautschukcompounds, die dem Stand der Technik entsprechen und nicht die erfindungsgemäßen Gele enthalten, nicht gelingt, die geforderten Ziele zu erreichen. Die größten Defizite bei den Compounds mit Ruß(1-4) bzw. mit aktivierter Kieselsäure (5-8) treten beim Mooneyscorch (MS), bei den Hystereseverlusten (tan δ/60°C) sowie bei der Erwärmung bei dynamischer Belastung im Goodrichflexometertest auf. Bei den Compounds, die SBR-Gel enthalten (9-10), ist gegenüber den Compounds 1-8 der Mooneyscorch, MS(130°C), test (ΔT) sowie tan δ/60°C verbessert. Defizite bestehen noch bei den Rückprallelastizitäten bei 23°C und 70°C sowie bei der Erwärmung bei dynamischer Belastung im Goodrichflexometertest und bei tan δ/60°C.

| Mischungs-Nr.: | 1 | 2 | 3 | 4 | 5 | 6 | 7 | 8 | 9 | 10 |
|---|---|---|---|---|---|---|---|---|---|---|
| Naturkautschuk ¹⁾ | 60 | 60 | 60 | 60 | 60 | 60 | 60 | 60 | | |
| SBR-Gel OBR 786 (50 Gew.-% in NR) | | | | | | | | | 120 | 120 |
| Buna ® CB 24 ²⁾ | 40 | | 40 | | 40 | | 40 | | | |
| Buna CB® 65 ³⁾ | | 40 | | 40 | | 40 | | 40 | 40 | 40 |
| Ruß N 330 | 60 | 60 | 60 | 60 | 2 | 2 | 2 | 2 | 2 | 2 |
| Silica VN 3 | | | | | 60 | 60 | 60 | 60 | 20 | 20 |
| Si 69® ⁴⁾ | | | | | 5 | 5 | 5 | 5 | 5 | 5 |
| Koresin ⁵⁾ | 4 | 4 | 4 | 4 | 4 | 4 | 4 | 4 | 4 | 4 |
| Renopol L ⁶⁾ | 5 | 5 | 5 | 5 | 5 | 5 | 5 | 5 | 5 | 5 |
| Zinkoxid | 5 | 5 | 5 | 5 | 5 | 5 | 5 | 5 | 5 | 5 |
| Stearinsäure | 2 | 2 | 2 | 2 | 2 | 2 | 2 | 2 | 2 | 2 |
| TMQ ⁷⁾ | 1,5 | 1,5 | 1,5 | 1,5 | 1,5 | 1,5 | 1,5 | 1,5 | 1,5 | 1,5 |
| 6PPD ⁸⁾ | 2,5 | 2,5 | 2,5 | 2,5 | 2,5 | 2,5 | 2,5 | 2,5 | 2,5 | 2,5 |
| Schwefel | 5 | 5 | 5 | 5 | 5 | 5 | 5 | 5 | 5 | 5 |
| CBS ⁹⁾ | 2 | 2 | 2 | 2 | 2 | 2 | 2 | 2 | 2 | 2 |
| Vulkcait D ¹⁰⁾ | | | | | 2 | 2 | 2 | 2 | 2 | 2 |
| KA 9188 ¹¹⁾ | | | 3 | 3 | | | 3 | 3 | | 3 |

| | | | | | | | | | | |
|---|---|---|---|---|---|---|---|---|---|---|
| 1) = SMR 5 (Standard Malaysian Rubber) | | | | | | | | | | |
| 2) Neodym Polybutadien der Bayer AG | | | | | | | | | | |
| 3) Verzweigter Polybutadienkautschuk der Bayer AG | | | | | | | | | | |
| 4) = Bis(tri-ethoxy-silyl-propyl-disulfan) (Si 69® der Degussa AG) | | | | | | | | | | |
| 5) = Kondensationsprodukt aus t-Butylphenol und Acetylen | | | | | | | | | | |
| 6) = Weichmacher auf Mineralölbasis | | | | | | | | | | |
| 7) = 2,2,4-Trimethyl-1,2-dihydrochinolin (Vulkanox® HS der Bayer AG) | | | | | | | | | | |
| 8) = N-1,3-Dimethylbutyl-N'-phenyl-p-phenylendiamin (Vulkanox® 4020 NA der Bayer AG) | | | | | | | | | | |
| 9) = N-Cyclohexyl-2-benzthiazylsulfenamid (Vulkacit® CZ der Bayer AG | | | | | | | | | | |
| 10) = Diphenylguanidin der Bayer AG (Vulkacit® D) | | | | | | | | | | |
| 11) = Versuchsprodukt KA 9188 der Bayer AG (Vulcuren® ) | | | | | | | | | | |

Zur Charakterisierung der Eigenschaften des unvernetzten Compounds werden folgende Messgrößen herangezogen: Mooneyviskosität ML 1+4 (100°C); Mooneyrelaxation MR 30; Mooneyscorch bei 130°C; und der tack (Eigenklebrigkeit) bestimmt.

| Mischungs-Nr.: | 1 | 2 | 3 | 4 | 5 | 6 | 7 | 8 | 9 | 10 |
|---|---|---|---|---|---|---|---|---|---|---|
| ML 1 + 4 (100°C) [ME] | 79 | 75,3 | 48,4 | 44,7 | 78,6 | 71,3 | 48,5 | 46,2 | 55 | 51 |
| MR 30 [%] | 13,4 | 14,3 | 8,1 | 7,6 | 10,0 | 10,0 | 6,4 | 6,1 | 10,9 | 9,1 |
| MS (130°C) | 8,7 | 9,1 | 11,3 | 11,2 | 7,4 | 8,3 | 9,0 | 9,1 | 23,2 | 22,2 |
| tack | 2,0 | 1,3 | 2,0 | 2,0 | 2,0 | 2,0 | 2,8 | 3,0 | 2,8 | 3,7 |

Im Extrusionsexperiment (Garvey die extrusion) wird die Extrusionsgeschwindigkeit und die Spritzquellung bestimmt:

| Mischungs-Nr.: | 1 | 2 | 3 | 4 | 5 | 6 | 7 | 8 | 9 | 10 |
|---|---|---|---|---|---|---|---|---|---|---|
| Extrusionsgeschwindigkeit [m/min] | 1,2 | 2,2 | | | 1,3 | 1,7 | | | 1,6 | 1,8 |
| Spritzquellung [%] | 47 | 50,0 | | | 47,8 | 37,9 | | | 26,1 | 23,2 |

Auf der Basis o.g. Compounds werden nach 15 Min. Vulkanisationszeit bei 165°C folgende Prüfergebnisse erhalten:

| Mischungs-Nr.: | 1 | 2 | 3 | 4 | 5 | 6 | 7 | 8 | 9 | 10 |
|---|---|---|---|---|---|---|---|---|---|---|
| Zugfestigkeit [MPa] | 16,7 | 17,4 | 14,1 | 12,7 | 13,8 | 12,9 | 9,7 | 9,4 | 11,5 | 5,0 |
| Bruchdehnung [%] | 215 | 220 | 120 | 115 | 215 | 190 | 103 | 90 | 260 | 75 |
| Spannungswert bei 50 % (MPa) | 2,5 | 2,6 | 4,3 | 4,3 | 2,3 | 2,5 | 4,2 | 4,5 | 2,2 | 3,7 |
| Spannungswert bei 100 % (MPa) | 5,5 | 5,8 | 10,9 | 10,7 | 6,2 | 6,8 | 9,4 | - | 3,6 | - |
| Spannungswert bei 300 % (MPa) | | | - | - | | | - | - | 7,8 | - |
| Härte Shore A, 23°C | 75 | 71 | 80 | 81 | 84 | 84 | 83 | 84 | 72 | 79 |
| Härte Shore A, 70°C | 74 | 74 | 79 | 79 | 82 | 83 | 82 | 83 | 67 | 75 |
| Rückprallelastizität, 23°C [%] | 50 | 48 | 57 | 52 | 54 | 52 | 59 | 58 | 39 | 43 |
| Rückprallelastizität, 70°C [%] | 64 | 60 | 67 | 64 | 63 | 62 | 69 | 69 | 65 | 72 |
| Goodrich Flexometer ΔT [°C] | 22,6 | 20,4 | 20,0 | 21,9 | 19,2 | 21,1 | 17,7 | 20,0 | 9,4 | 7,9 |
| Goodrich Flexometer T [°C] | 141,4 | 141,8 | 136,6 | 139,0 | 136,7 | 137,8 | 132,8 | 133,5 | 123,1 | 117,4 |
| tan δ (60°C) | 0,094 | 0,106 | 0,096 | 0,101 | 0,114 | 0,123 | 0,104 | 0,106 | 0,069 | 0,049 |

### Mischungsserie B:

In dieser Mischungsserie wird gezeigt, daß die erfindungsgemäßen Kautschukcompounds bei den geforderten Eigenschaften Vorteile aufweisen. Insbesondere zeigt sich, daß Compounds, die Kautschukpartikel mit Glastemperaturen <-60°C enthalten, unerwartet günstige Eigenschaften bei den Hystereverlusten (tan δ/60°C) sowie bei der Erwärmung im Goodrichflexometertest (Δ T) aufweisen.

In einem Laborinnenmischer werden gemäß nachfolgender Rezeptur unterschiedliche Compounds (Angabe in phr) auf der Basis verschiedener BR-Gele hergestellt. Die Mischungskomponenten werden in der in der Tabelle angegebenen Reihenfolge gemischt:

| Mischungs-Nr.: | 1* | 2 | 3 | 4* | 5 | 6 | 7 | 8 |
|---|---|---|---|---|---|---|---|---|
| Naturkautschuk, vormastiziert | 60 | 60 | 60 | 60 | 60 | 60 | 60 | 60 |
| OBR 1052 A/0,5 DCP | 60 | | | | | | | |
| OBR 801/1,0 DCP | | 60 | | | | | | |
| OBR 821/1,0 DCP | | | 60 | | | | | |
| OBR 1052 B/1,0 DCP | | | | 60 | | | | |
| OBR 802/1,5 DCP | | | | | 60 | | | |
| OBR 803/2,0 DCP | | | | | | 60 | | |
| OBR 900/2,5 DCP | | | | | | | 60 | |
| OBR 901/4 DCP | | | | | | | | 60 |
| Buna CB 65 | 40 | 40 | 40 | 40 | 40 | 40 | 40 | 40 |
| Ruß N 330 | 2 | 2 | 2 | 2 | 2 | 2 | 2 | 2 |
| Silica VN 3 | 20 | 20 | 20 | 20 | 20 | 20 | 20 | 20 |
| Si 69® | 5 | 5 | 5 | 5 | 5 | 5 | 5 | 5 |
| Koresin | 4 | 4 | 4 | 4 | 4 | 4 | 4 | 4 |
| Renopol L | 5 | 5 | 5 | 5 | 5 | 5 | 5 | 5 |
| Zinkoxid | 5 | 5 | 5 | 5 | 5 | 5 | 5 | 5 |
| Stearinsäure | 2 | 2 | 2 | 2 | 2 | 2 | 2 | 2 |
| TMQ | 1,5 | 1,5 | 1,5 | 1,5 | 1,5 | 1,5 | 1,5 | 1,5 |
| 6PPD | 2,5 | 2,5 | 2,5 | 2,5 | 2,5 | 2,5 | 2,5 | 2,5 |
| Schwefel | 5 | 5 | 5 | 5 | 5 | 5 | 5 | 5 |
| CBS | 2 | 2 | 2 | 2 | 2 | 2 | 2 | 2 |
| KA 9188 | 3 | 3 | 3 | 3 | 3 | 3 | 3 | 3 |

| | | | | | | | | |
|---|---|---|---|---|---|---|---|---|
| * = erfindungsgemäß | | | | | | | | |

| Mischungs-Nr.: | 1* | 2 | 3 | 4* | 5 | 6 | 7 | 8 |
|---|---|---|---|---|---|---|---|---|
| ML 1 + 4 (100°C) [ME] | 50,8 | 58,5 | 46 | 50,9 | 46,9 | 45,6 | 38,1 | 41,5 |
| MR 30 [%] | 8,5 | 11,8 | 6,3 | 8,6 | 6,8 | 6,1 | 5,2 | 5,8 |
| MS (130°C) | 22,8 | 20,1 | 21,9 | 22,2 | 20,9 | 19,8 | 23,1 | 23,8 |
| tack | 2,5 | 3,0 | 4,2 | 3,0 | 3,5 | 4,0 | 4,3 | 3,3 |
| Mischungs-Nr.: | 1 2 | | 3 | | 4 | 5 | 6 | 7 |
| Extrusionsgeschwindigkeit [m/min] | | 1,9 | 2,0 | | 2,1 | 2,1 | 2,2 | 2,3 |
| Spritzquellung [%] | | 20,7 | 18,6 | | 19,4 | 20,3 | 19,4 | 17,6 |

| | | | | | | | | |
|---|---|---|---|---|---|---|---|---|
| * = erfindungsgemäß | | | | | | | | |

Auf der Basis o.g. Compounds werden nach 15 Min. Vulkanisationszeit bei 165°C folgende Prüfergebnisse erhalten:

| Mischungs-Nr.: | 1* | 2 | 3 | 4* | 5 | 6 | 7 | 8 |
|---|---|---|---|---|---|---|---|---|
| Zugfestigkeit [MPa] | 2,0 | 3,8 | 4,0 | 2,5 | 7,1 | 9,7 | 7,3 | 8,1 |
| Bruchdehnung [%] | 65 | 65 | 80 | 60 | 85 | 120 | 150 | 185 |
| Spannungswert/50 % [MPa] | 4,6 | 2,8 | 2,4 | 2,1 | 4,0 | 3,9 | 2,8 | 3,0 |
| Spannungswert/100 % [MPa] | | - | - | | - | 7,8 | 4,9 | 4,6 |
| Spannungswert/300 % [MPa] | | - | - | | - | - | - | - |
| Härte Shore A, 23°C | 65 | 75 | 72 | 70 | 81 | 81 | 75 | 78 |
| Härte Shore A, 70°C | 67 | 75 | 72 | 71 | 79 | 79 | 72 | 72 |
| Rückprallelastizität, 23°C [%] | 78 | 58 | 60 | 72 | 51 | 47 | 38 | 34 |
| Rückprallelastizität, 70°C [%] | 84 | 77 | 77 | 82 | 69 | 64 | 63 | 52 |
| Goodrich Flexometer Δ T [°C] | 0,4 | 9,8 | 8,7 | 2,3 | 12,1 | 12,8 | 13,9 | 18,1 |
| Goodrich Flexometer T [°C] | 102,4 | 109,7 | 106,5 | 103,8 | 118,3 | 121,4 | 124,1 | 138,1 |
| tan δ (60°C) | 0,011 | 0,028 | 0,018 | 0,014 | 0,057 | 0,085 | 0,086 | 0,155 |

| | | | | | | | | |
|---|---|---|---|---|---|---|---|---|
| * = erfindungsgemäß | | | | | | | | |

Wie aus den Versuchen zu ersehen ist, werden die erfindungsgemäß gestellten Aufgaben (insbesondere die geringen Hystereseverluste und die niedrige Erwärmung bei dynamischer Beanspruchung) nur dann erfüllt, wenn Kautschukpartikel auf Basis von Polybutadien eingesetzt werden (siehe auch Vergleich in Mischungsserie A mit Partikeln auf Basis von SBR) und wenn deren Glasübergangstemperatur Werte von <-60°C aufweisen.

## Patentansprüche

1. Kautschukmischungen aus mindestens einem doppelbindungshaltigen Kautschuk (A) und Partikeln aus Polybutadienkautschuken mit einer Glasübergangstemperatur von < -60°C (B), wobei die Komponente (B) in Mengen von 10 bis 150 Gew.-%, bezogen auf die Gesamtmenge an Komponente (A), vorhanden ist, sowie gegebenenfalls weiteren Füllstoffen und Kautschukhilfsmitteln in üblichen Mengen.

2. Kautschukmischungen nach Anspruch 1, **dadurch gekennzeichnet, dass** die Komponente (B) in Mengen von 30 bis 120 Gew.-% vorhanden ist.

3. Kautschukmischungen nach Anspruch 1, **dadurch gekennzeichnet, dass** als doppelbindungshaltige Kautschuke (A) NR, BR, SBR, SIBR und SNBR eingesetzt werden.

4. Kautschukmischungen nach Anspruch 1, **dadurch gekennzeichnet, dass** als Kautschukhilfsmittel 1,6-Bis(N,N'-dibenzylthiocarbamoyldithio)-hexan eingesetzt wird.

5. Kautschukmischungen nach Anspruch 1, **dadurch gekennzeichnet, dass** als zusätzlicher Füllstoff Kieselsäure eingesetzt wird.

6. Kautschukmischungen nach Anspruch 1, **dadurch gekennzeichnet, dass** als zusätzlicher Füllstoff Kieselsäure eingesetzt wird, der mit Si 69® aktiviert ist.

7. Kautschukmischungen nach Anspruch 1, **dadurch gekennzeichnet, dass** die Partikel aus Polybutadienkautschuken eine Glasübergangstemperatur im Bereich von -65°C bis -100°C aufweisen.

8. Verwendung der Kautschukmischungen nach Anspruch 1 zur Herstellung dynamisch hoch belasteter Reifenbauteile, insbesondere Reifenwulst- und Apexmischungen, Substread-Mischungen, Reifenkarkassen und Reifenseitenwänden.

9. Verwendung der Kautschukmischung nach Anspruch 1 zur Herstellung dynamisch hochbelasteter Reifenbauteile insbesondere für Einlagen von Reifenseitenwänden für Reifen mit Notlaufeigenschaften ("Inserts for run-flat tires").
